# EUROPEAN PATENT APPLICATION

(11) **EP 2 264 560 A1**
(43) Date of publication of application: **22.12.2010**
(21) Application number: 09161638.3
(22) Date of filing: 02.06.2009
(51) Int. Cl.: G05D 25/00, H05B 37/02, F21V 33/00

(54) **Appliance with luminous housing control depending on environment color**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

Appliance comprising a housing, wherein a part of said housing is optically transmissive, said optically transmissive part having an exterior surface through which light travelling through the optically transparent part is transmitted, so as to cause the transmitted light to be visible upon viewing the exterior surface. The appliance further comprises a controllable light source assembly, capable of producing light in a variety of colors, and configured to couple produced light into the optically transmissive part of the housing. The appliance also includes a control unit, and a color vision system, configured to optically observe an environment of the appliance, and to output data relating to colors of the observed environment to the control unit. The control unit is configured to control a housing color to be produced by the light source assembly, whereby said housing color is determined in dependence of the data received from the color vision system.

## Description

### FIELD OF THE INVENTION

The present invention pertains to appliances, in particular domestic appliances, having a customizable appearance.

### BACKGROUND

Domestic appliances typically include a housing in one or more dominant colors. The preponderant color of a (robotic) vacuum cleaner, for example, may be red. But no matter what predominant color a manufacturer chooses for its appliance, it is likely that there will be a demand for differently colored specimens as well. This is simply because color is a highly subjectively appreciated quality. To meet such demand, a manufacturer may choose to fabricate its appliances in a range of colors. The otherwise same vacuum cleaner may for example be marketed in red, green and blue. This approach enables a consumer to pick the vacuum cleaner of his choice, such as the one best fitting his home interior. However, since it is infeasible to produce an appliance in all the colors of the rainbow, some consumers may still be disappointed with the necessarily limited choice in colors.

Furthermore, a robotic vacuum cleaner is a good example of a mobile device that is used in different environments. It may autonomously wander about a house, thereby traversing different rooms. As each room may have its own color scheme, the robotic vacuum cleaner may fit in perfectly with one room, but appear dreadful against the backdrop of another. Apart from causing a less than satisfying aesthetic appreciation, the color may also render the robotic vacuum cleaner dangerous. In case its predominant color is brown, for example, it may not be visible on brown flooring material present in one of the rooms, which may cause someone to overlook it and stumble over it. Especially elderly, who may have to rely increasingly on autonomous robotic aids as a result of their generally waning constitution, run the risk of accidental encounters.

An exemplary robotic vacuum cleaner exhibiting the above-mentioned drawbacks is disclosed by US 6,774,596. The robotic vacuum cleaner that has a plurality of sensors, such as ultrasonic, pyroelectric and passive infrared sensors, through which the machine can navigate its way around a room without hitting objects or walls. The vacuum cleaner further has an indicator light that changes color depending upon the state of interaction of the various sensors with the environment, indicating the mood of the cleaner. Here 'mood' is used as a term for status conditions as being stuck, malfunctioning components, approaching a warm object ahead etc.

It is an object of the invention to provide for an appliance that overcomes or mitigates one or more of the aforementioned problems.

### SUMMARY OF THE INVENTION

To this end, the invention provides an appliance that comprises a housing, wherein at least a part of said housing is optically transmissive, said optically transmissive part having an exterior surface through which light travelling through the optically transparent part is transmitted, so as to cause the transmitted light to be visible upon viewing the exterior surface. The appliance further comprises a controllable light source assembly, capable of producing light in a variety of colors, and configured to couple produced light into the optically transmissive part of the housing. The appliance also includes a control unit, and a color vision system, configured to optically observe an environment of the appliance, and to output data relating to colors of the observed environment to the control unit. The control unit is configured to control a housing color to be produced by the light source assembly, whereby said housing color is determined in dependence of the data received from the color vision system.

The appliance according to the present invention may be said to be fitted with a luminous skin. The luminous skin is formed by a housing that is at least partly optically transmissive, and that is operably associated with a the controllable light source assembly. Light that has been coupled into the optically transmissive part of the housing by the controllable light source assembly, and that has been transmitted through the exterior surface thereof, is visible to a person who views the appliance. The color of the appliance as perceived by this person may thus correspond to the color of the light that is coupled or emitted into the optically transmissive part of the housing by the light source assembly. In the appliance according to the invention, the color of the light produced by the light source assembly is determined by the control unit in dependence of data relating to the colors of the environment. This data is gathered by a color vision system. The appliance may thus dynamically adapt its color to its surroundings.

The disclosed appliance allows for a high degree of personalization of its appearance. The appliance may, for example, be adjusted or configured to assume a color that harmonizes with the interior of a room. Furthermore, instead of an aesthetic, harmonizing color program the control unit may for example be set to execute a safety-related color program that maintains a housing color that contrasts with the background of the appliance, so as to make it stand out. The fact that the housing is luminous (instead of passively colored) may thereby ensure that the appliance is visible even in ill-lit or dark spaces. Other, user-definable color programs are also possible.

In one embodiment of the appliance, the exterior surface of the optically transmissive part of the housing covers at least 25%, and preferably more than 50% of the total exterior surface of the appliance that is visible to a an observer when the appliance is used in accordance with its intended purpose. In relation to a (robotic) vacuum cleaner, for example, this means that the part of its exterior surface that during vacuuming faces the ground being vacuumed may be left out from the calculation. The minimum figures for the portion of the optically transmissive part in the overall visible housing area helps to ensure that the housing part whose color can be adapted is of significance to the perceived color of the appliance.

In an advantageous embodiment of the appliance according to the invention, the optically transmissive part of the housing is formed by an optical wave guide. The nature of an optical wave guide enables light coupled into it to be distributed easily around the housing of the appliance, for example to promote substantially homogenous coloring thereof. The wave guide may typically be characterized as a 'leaking' wave guide, i.e. a wave guide for visible light that is configured such that, per unit of length or area, a fraction of the light travelling therethrough is allowed to escape via an exterior surface.

In another advantageous embodiment of the appliance according to the invention, the control unit is configured to control the housing color in accordance with a user-adjustable color program and in dependence of the data received from the color vision system. That is to say, the control unit may be capable of executing more than one color program, each of which determines a housing color in dependence of the data received from the color vision system, but in a different manner and with a different outcome. The appliance allows a user to choose the color program that suits him best. This is in contrast to another embodiment of the appliance, wherein the control unit may be capable of executing only a single color program that has been pre-selected by the manufacturer. In the claims, this distinction is captured by the phrase 'adjustable or configured to', where 'adjustable' implies freedom of choice for the user, whereas 'configured' intends to cover appliances that are simply configured to execute a certain color program, possibly without any choice for the user.

The control unit of the appliance may typically be configured to determine at least one environment color from the data received from the color vision system. This at least one environment color may then form a convenient parameter on the basis of which, through a predefined model or relationship, a desired housing color can be determined. In one embodiment of the appliance, the control unit is adjustable or configured to estimate the influence of the light transmitted through the exterior surface of the optically transmissive part of the housing based on the data relating to colors of the observed environment, and to compensate for this influence when determining the at least one environment color.

In some situations, the light emitted by the luminous housing may influence the perceived environment color. This is particularly so in ill-lit and relatively full or tight spaces, wherein a portion of the emitted light is reflected back and recorded by the color vision system of the appliance. To prevent the appliance from reacting to its own color changes, the control unit may be configured to estimate the influence or contribution of the luminous housing on/to the data gathered by the vision system, and to compensate there for. Estimates may for example be made by monitoring changes in the collected image data that occur in (immediate) response to instructions that are given to the light source assembly to change the housing color. A correlation between the change in the determined environment color and the instructed color change of the housing may be generalized, and employed as a correction in determining the (true) environment color.

An alternative solution to the problem of self-influencing of the perceived environment color may be to dispose any light sensors of the color vision system relatively close to the ground, possibly at a bottom side of the appliance, or in a recess in the housing of the appliance. Such measures may diminish the likelihood of self-generated light that is scattered around by the environment being recorded again by these light sensors.

Besides the color of the light produced by the light source assembly, the brightness of the light may also be a factor worth controlling. It may, for example, be desirable that the appliance brightens in gloomy environments, while it dims in spaces blazing with light. In an embodiment of the appliance, the control unit may therefore be configured to determine an environment brightness level from the data received from the color vision system, and to set a brightness of the light produced by the light source assembly in relation thereto.

It will be appreciated that the present invention is particularly applicable to appliances that, due to their nature, are intended to be used in different or variable environments. Such appliances may include devices that move autonomously, e.g. the robotic vacuum cleaner mentioned above, and devices that are moved around by a user, e.g. a remote control or a cellular phone. Mobile appliances that, in the light of their function or normal use, are intended to move/be moved around may be referred to as 'inherently mobile appliances'.

The above-described and other features and advantages of the invention will be more fully understood from the following detailed description of certain embodiments of the invention, taken together with the accompanying drawings, which are meant to illustrate and not to limit the invention.

### BRIEF DESCRIPTION OF THE DRAWINGS

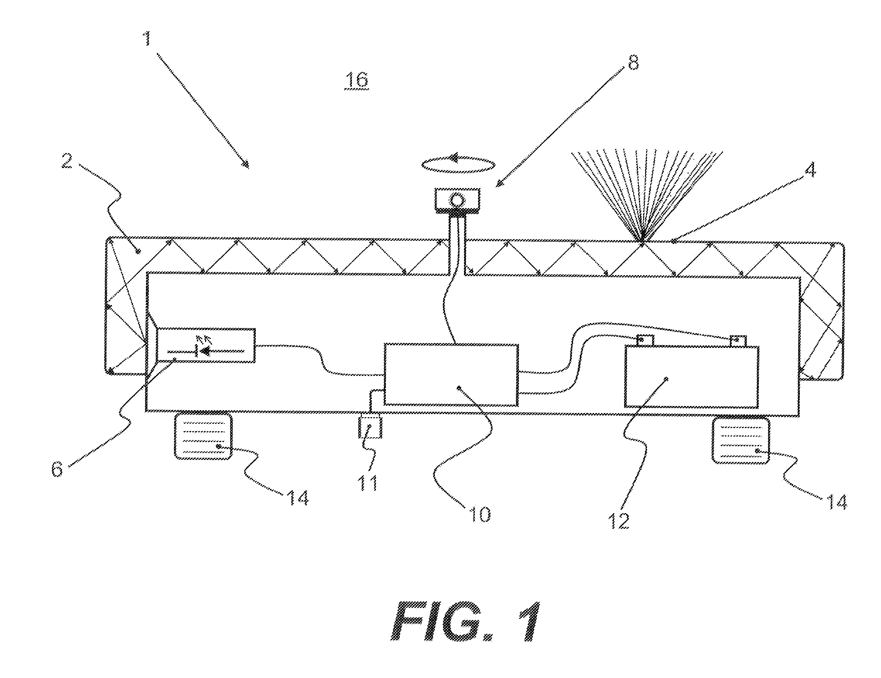

Fig. 1 is a schematic cross sectional view of an exemplary robotic vacuum cleaner in accordance with the present invention.

### DETAILED DESCRIPTION

An appliance 1 according to the present invention may comprise a housing that includes an optically transmissive part 2, a controllable light source assembly 6, a color vision system 8 and a control unit 10. These separately identifiable yet collaborating components of the appliance 1 will hereafter be discussed and exemplified in turn, first in abstracto and subsequently with reference to the exemplary robotic vacuum cleaner 1 shown in Fig. 1. For convenience, reference numerals relating to Fig. 1 are also included in the general, abstract discussion of the invention.

The housing, i.e. the outer accommodating structure of an appliance 1, includes an optically transmissive part 2, for example in the form of an electromagnetic wave guide that is capable of guiding visible light. Optical wave guides in themselves are known in the art and exist in different forms, such as dielectric wave guides and hollow structures having a highly reflective inner surface. The latter are sometimes referred to as 'light guides'. By way of example, the dielectric wave guide will be discussed in some more detail below. It is noted, however, that the term 'optically transmissive part' as used in the claims is not to be construed as meaning merely 'dielectric wave guide'; instead it is intended to include any type of optically transparent structure that is suitable to practice the invention.

The physical phenomenon that underlies the operation of most dielectric wave guides is called 'total internal reflection'. It occurs when a ray of light traveling in the core medium of the wave guide strikes a boundary thereof with an adjacent medium having a lower refractive index, at an angle larger than a critical angle relative to the boundary normal. The respective ray then reflects off the boundary and continues its propagation through the core medium of the wave guide. Since total internal reflection is lossless, light may travel over long distances within a waveguide without much attenuation. The only loss factor is absorption of light by the core medium of the waveguide itself.

Although the medium with the lower refractive index that bounds the core medium of the wave guide with the higher refractive index is usually necessary for achieving total internal reflection, the former is not necessarily a structural part of the wave guide. An uncladded optical fiber having a refractive index of 1.48 and extending through air having a refractive index of approximately 1.00, for example, forms a wave guide even though the air is not a structural component of the wave guide in the sense of a 'manufactured part'. Accordingly, whenever the term 'wave guide' is employed in this text to designate a dielectric wave guide (whose operation is based on total internal reflection as described), it is understood to comprise a core medium, while a surrounding medium may be a structural part of the appliance, for example in the form of cladding, but need not be.

The housing may include the dielectric optical wave guide 2 in the form of one or more optically transmissive structures that may be connected to, e.g. adhered to or embedded in, a carrier body having a lower refractive index than said structures. Alternatively, the housing may be constructed in a single piece that itself embodies the wave guide. In case air is assumed to be the medium surrounding the (domestic) appliance, an exterior surface of such a transparent housing structure is virtually always bounded to a medium having a lower refractive index. The material of the waveguide may be chosen as desired, and for example include glass or an optically transparent plastic, such as polymethyl methacrylate (better known as acrylic glass, or PMMA).

To allow light to escape from the wave guide 2, the exterior surface 4 of the dielectric wave guide may be suitably treated, for example by abrasion, bending, or notching. Such a treatment may frustrate the total internal reflection at the exterior surface boundary, and thus permit at least a fraction of the light incident on said boundary to be transmitted therethrough. Alternatively, light scattering may be effected by selectively applying a coating material to the exterior surface 4 of the wave guide 2, or by selectively incorporating scattering material or a grating pattern within the wave guide. In some embodiments light may escape from the wave guide by natural light leakage. These and other approaches to effect the emission of light from a wave guide 2 are in themselves known in the art, and are therefore not elaborated upon.

The optically transmissive part 2 of the housing may preferably be configured such that the light intensity of light transmitted through the exterior surface 4 thereof is substantially uniform across that surface on a macroscopic scale. Due to the uniformity, the housing will appear substantially homogeneously illuminated to a person viewing the appliance 1. In the case of a dielectric wave guide, a homogenous light intensity may be achieved by selectively applying any of the respective treatments just mentioned.

The controllable light source assembly 6 may comprise one or more light sources. In one embodiment, a single white light source may be used in combination with, for example, a multi-color filter or a refracting element such as a prism, to produce light of a desired color. In another embodiment, the light source assembly may comprise multiple light sources, each having a different color. By mixing the light of different colors, a desired color may be obtained. In a preferred embodiment, the light source assembly may comprise one or more light emitting diodes (LED), for example in the form of a single multi-colored LED, or in the form of a number of separately controllable LEDs in primary colors. Due to their durability and high efficiency, LEDs are well suited to illuminate domestic appliances that are exposed to mechanical shocks and/or that run on a battery instead of off the mains. Apart from the light sources and optional elements like filters, dispersive prisms and gratings, the controllable light source assembly may also comprise an electronic control circuit that controls the operation of the light sources, and that interfaces with the control unit.

The color vision system 8 may comprise one or more light sensors, for example in the form of separate photodiodes or 1 pixel photo sensors, or a consolidated image sensor such as a charge coupled device (CCD) or a complementary metal oxide semiconductor (CMOS) sensor. The color vision system, and hence the assembly of light sensors, is understood to be capable of registering different colors (in the visible electromagnetic spectrum). The resolution of the color vision system is of secondary importance. In case an image sensor is used, a certain minimum of for example around 256x256 pixels seems advisable to ensure that sufficient data may be gathered to reliably determine a dominant environment color. If desired, the appliance 1 may even be fitted with more than one image sensor. Different sensors may for example be disposed at spaced apart positions on the housing so as to enable the color vision system 8 to gather color information from different directions, enabling the control unit 10 to improve its assessment of the color scheme of the environment. Alternatively, a number of light sensors/a single image sensor may be mounted on a rotatable, motor driven support in order to actively scan the environment 16 of the appliance 1. An image sensor may be supplemented with a lens system to enable the color vision system 8 to take sharp, meaningful snapshots of the surroundings.

The control unit 10 is operatively connected to both the color vision system 8, from which it receives data relating to colors of the observed environment 16, and the controllable light source assembly 6, which is subjected to its control. The control unit 10 may comprise an electronic circuit, e.g. a microprocessor plus some working memory, capable of executing one or more user-selectable color programs, and an input device that allows a user to select or adapt a color program. The operation of the control unit 10 will now be discussed in some more detail.

During typical operation, the control unit 10 may repeatedly execute the same set of instructions. In one embodiment of the appliance 1, the primary high level instructions may schematically read as follows:
(i) obtain image data from the color vision system
(ii) determine at least one environment color from the image data obtained from the color vision system
(iii) determine a desired housing color based on the selected color program and the determined environment color
(iv) adjust the desired housing color

Step (i) is concerned with obtaining image data from the color vision system 8. The image data may be composed of one or more color pictures of the environment of the appliance in a resolution of the aforementioned image sensor. In the case of multiple pictures, the pictures may be taken at different moments in time, by different image sensors and/or from different directions relative to the environment. The image date may for example represent a 360° panoramic picture of the appliance's surroundings, wherein the panorama is made up of several smaller pictures. At the second step (ii), the control unit may process the obtained image data to deduce at least one environment color therefrom. The at least one environment color to be determined may for example be the most frequently occurring color of the environment, which may be found by drawing up a color histogram, or the average color, which may be calculated by averaging numeric color values of the pixels. Of course, other environment color indices may be used as well. Step (iii) then translates the at least one environment color into a desired housing color in correspondence with the selected color program. Many color programs may be implemented. One color program, for example, may be configured to determine a housing color that contrasts with the at least one environment color, so as to make the appliance stand out from its environment. Other color programs may be configured to set a housing color that corresponds to, or forms an appealing combination with the at least one environment color, so as to make the appliance blend in with, or look neat against its surroundings. Still another color program may be configured to determine a housing color based on the at least one environment color and a user-specifiable relationship that links each of a number of environment colors to a desired housing color. The user-specifiable relationship may for example be reflected by a formula or table, wherein parameters or entries can be adapted by the user in accordance with his personal preferences. Once a desired housing color is determined, step (iv) proceeds to actually change to the color of the housing. It is noted that the color of the housing does not have to be changed into the determined housing color at once. In many situations, a gradual transition (via a range of intermediate colors between the current housing color and the desired housing color) may be preferable, for example to prevent the appliance 1 from changing its color in a flashing, disturbing manner.

In some situations, the light emitted by the luminous housing may influence the perceived environment color. This is particularly so in ill-lit and relatively full or tight spaces, wherein a portion of the emitted light is reflected back onto the image sensor of the appliance. To prevent the appliance from reacting to its own color changes, the control unit may be configured to estimate the influence or contribution of the luminous housing on/to the illumination of the image sensor, and to compensate there for. Estimates may for example be made by monitoring changes in the collected image data that occur in (immediate) response to instructions that are given to the light source assembly to change the housing color. A correlation between the change in the determined environment color and the instructed color change of the housing may be generalized, and employed as a correction in determining the (true) environment color. An alternative solution may include disposing the light sensors/image sensor of the color vision system relatively close too the floor, preferably below the optically transmissive part. This will diminish the amount of self-generated, reflected light incident on the sensor(s). In variations on the invention, the appliance might be fitted with a passive (i.e. light absorbing and reflecting) instead of an active (i.e. light emitting) surface that is capable of changing color. Such a surface may be based on thermochromic or electrochromic materials, e.g. liquid crystals or polymers. Passive surfaces, however, are of little use in ill-lit environments, and are not always capable of appearing in the desired color. This is because the ambient light must comprise the desired housing color: an inherently red surface that is illuminated by green light will not appear red but mostly black. Likewise, a passively colored housing will hardly or not at all show up in the twilight or the dark.

Besides the color of the light produced by the light source assembly, the brightness of the light may also be a factor worth controlling. It may, for example, be desirable that the appliance brightens in gloomy environments, while it dims in spaces blazing with light. In an embodiment of the appliance 1, the control unit may therefore be configured to determine an environment brightness level from the data received from the color vision system, and to set a brightness of the light produced by the light source assembly in relation thereto.

It may further be desirable, especially when the appliance 1 has somewhat large dimensions, to be able to provide different parts of the device with different colors. In such a embodiment, a left side of the appliance 1 facing a ochre yellow wall may for example be colored in contrast therewith, while a right side that faces a bordeaux chair may be colored bordeaux. To enable this multiple coloring of the housing, the optically transmissive part of the housing may be fitted with a number of substantially independently colorable regions. Such regions may for example be created by physically separating them, or, in case of a wave guide, by shaping the wave guide such that light traveling through one region is incapable of reaching another. Givens these regions, the controllable light source assembly may be configured to couple light of a respective regional housing color into each respective region, so as to color the regions substantially independently of one another. The control unit may be configured to set the regional housing color for each of said regions in dependence of the data received from the color vision system, and if so desired, in accordance with a user-adjustable color program.

Now that the features of the appliance according to the invention have been elucidated in detail, attention is invited to an exemplary, practical embodiment in the form of the robotic vacuum cleaner 1 shown in Fig. 1.

Fig. 1 schematically shows a cross sectional side view of an exemplary robotic vacuum cleaner 1. The robotic vacuum cleaner 1 is fitted with a drive system, including a number of motorized wheels 14, that allows it to autonomously explore its surroundings. A vacuum system and components of the drive system other than the wheels 14 are omitted from Fig. 1. They are known in the art and will not be elaborated upon here.

The robotic vacuum cleaner further comprises a housing, a top part of which is formed by an optical wave guide 2 made of colorless acrylic glass. The optical wave guide 2 encloses roughly an upper half of the robotic vacuum cleaner 1, and thus determines its appearance when viewed from above. Underneath the wave guide 2 and within the housing, the appliance 1 accommodates a controllable light source assembly 6, a control unit 10 and a battery 12. The light source assembly 6 is equipped with an RGB LED (i.e. a typically composite LED capable of producing the primary colors red, green and blue, which colors are then mixed to produce the desired color) that is controlled and powered by the control unit 10. A light-emitting side of the assembly 6 is suitably connected to an interior surface of the wave guide 2, ensuring that light produced by the light source assembly is efficiently coupled into the wave guide. The control unit 10 is connected to the battery 12. The battery 12 may be dedicated to feeding the light skin of the appliance 1, but may also be the sole power source that feeds all electronic systems of the appliance, including the vacuum system and the drive system. A depleted battery 12 will typically be recharged when the robotic vacuum cleaner 1 docks with its docking station. The control unit 10 may itself be controlled by a user via a user control 11 disposed at the bottom of the housing. In the depicted embodiment the user control 11 is a turnable knob, whose rotational position sets the color program to be executed by the control unit. In other embodiments, the user control may comprise more versatile input devices, such as a keyboard. Embodiments without a user control are possible as well. A color vision system in the form of a small digital camera 8 is mounted at a position above the wave guide 2. To enable visually scanning the environment independent of the position of the vacuum cleaner 1, the camera 8 is disposed on a rotatable, motorized support. Both the support and the camera are controlled and powered by the control unit 10.

The operation of the robotic vacuum cleaner 1, as far as the light skin is concerned, is as follows. If a user control 11 is present, the user selects the desired color program via the user control. Then the vacuum cleaner 1 is sent off to do its job. The control unit 10 simultaneously instructs the motorized platform to rotate and the digital camera 8 to take snapshots of the surroundings. Recorded pictures are then downloaded from the camera 8. The control unit 10 analyzes the data and determines a relevant color of the surroundings. Next, it determines a desired housing color in accordance with the user-selected color program, and instructs the light source assembly 6 to produce a corresponding color. The light produced by the light source assembly 6 is coupled into the wave guide 2, and spreads therethrough. As a result of suitable treatment of the exterior surface 4, part of the light is transmitted therethrough to effect the homogeneous housing color that is perceivable by a person who views the appliance.

It is understood that the present invention is not limited to robotic vacuum cleaners. In principle, any domestic appliance, device or object may be fitted with a luminous housing as described above. Advantageous examples may include remote controls, telephones, robotic lawn mowers (a contrasting color program may help to locate them) and mobile air conditioning units (a harmonizing color program may help to hide them from the eye).

With regard to the terminology used in this text, it is noted that the terms 'light', 'optical', 'optically transmissive', 'wave guide', 'vision system', 'image sensor' and the like all relate to visible light, or to structures, components or devices configured to handle visible light. 'Visible light' is understood to be electromagnetic radiation that is perceivable by the unaided human eye, and excludes electromagnetic radiation in the non-visible part of the spectrum, such as micro-wave radiation and infrared radiation.

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

### LIST OF ELEMENTS

- 1: Robotic vacuum cleaner
- 2: Optically transmissive part of the housing / optical wave guide
- 4: Exterior surface of optically transmissive part of the housing
- 6: Controllable light source assembly
- 8: Color vision system
- 10: Control unit
- 11: User control
- 12: Battery
- 14: Motorized wheel of drive system
- 16: Environment of appliance

## Claims

1. An appliance (1), in particular autonomously movable devices, such as a robotic vacuum cleaner (1), and devices which are movable by a user, such as a remote control, a vacuum cleaner or a cellular phone, comprising:
- a housing, wherein at least a part of said housing is optically transmissive, said optically transmissive part having an exterior surface (4) through which light travelling through the optically transparent part is transmitted, so as to cause the transmitted light to be visible upon viewing the exterior surface;
- a controllable light source assembly (6), capable of producing light in a variety of colors, and configured to couple produced light into the optically transmissive part of the housing;
- a control unit; and
- a color vision system (8), configured to optically observe an environment (16) of the appliance, and to output data relating to colors of the observed environment to the control unit (10);
wherein the control unit (10) is configured to control a housing color to be produced by the light source assembly, whereby said housing color is determined in dependence of the data received from the color vision system.

2. The appliance according to claim 1, wherein the optically transmissive part of the housing (2) is an optical wave guide.

3. The appliance according to claim 1 or 2, wherein the control unit (10) is configured to control the housing color in accordance with a user-adjustable color program and in dependence of the data received from the color vision system.

4. The appliance according to claim 1 or 2, wherein the control unit (10) is configured to determine at least one environment color from the data received from the color vision system (8).

5. The appliance according to claim 4, wherein the control unit (10) is adjustable or configured to control the housing color such that it contrasts with the at least one environment color, so as to make the appliance stand out from its environment.

6. The appliance according to claim 4, wherein the control unit (10) is adjustable or configured to control a housing color such that it corresponds to the at least one environment color, so as to make the appliance blend in with its environment.

7. The appliance according to claim 4, wherein the control unit (10) is adjustable or configured to control a housing color based on the at least one environment color and a user-specifiable relationship that links each of a number of environment colors to a desired housing color.

8. The appliance according to claim 1 or 2, wherein the optically transmissive part of the housing (2) comprises two or more regions, wherein the controllable light source assembly (6) is configured to couple light of a respective regional housing color into each respective region so as to color each region independently of the other regions, and wherein the control unit (10) is configured to control the regional housing color for each of said regions in dependence of the data received from the color vision system.

9. The appliance according to claim 8, wherein the control unit (10) is configured to control the regional housing color for each of said regions in accordance with a user-adjustable color program and in dependence of the data received from the color vision system

10. The appliance according to claim 1 or 2, wherein the control unit (10) is adjustable or configured to determine an environment brightness level from the data received from the color vision system (8), and to control a brightness of the light produced by the light source assembly (6) in relation thereto.

11. The appliance according to claim 4, wherein the control unit (10) is adjustable or configured to estimate the influence of the light transmitted through the exterior surface (4) of the optically transmissive part of the housing (2) based on the data relating to colors of the observed environment, and to compensate for this influence when determining the at least one environment color.

12. The appliance according to claim 1 or 2, wherein the optically transmissive part of the housing (2) is configured such that a light intensity of the light transmitted through the exterior surface (4) is uniform across that surface on a macroscopic scale.

13. The appliance according to claim 1 or 2, wherein the controllable light source assembly (6) comprises at least one light-emitting diode for producing light that is coupled into the optically transmissive part of the housing (2).

14. The appliance according to claim 1 or 2, wherein the optically transmissive part of the housing (2) is at least partly made of a transparent plastic.
